(19) **Europäisches Patentamt**

**European Patent Office**

**Office européen des brevets**

(11) **EP 0 821 827 B1**

(12) **EUROPEAN PATENT SPECIFICATION**

(45) Date of publication and mention
of the grant of the patent:
**06.06.2001 Bulletin 2001/23**

(21) Application number: **95917003.6**

(22) Date of filing: **20.04.1995**

(51) Int Cl.$^7$: **G11B 20/10**

(86) International application number:
**PCT/US95/04664**

(87) International publication number:
**WO 96/33491 (24.10.1996 Gazette 1996/47)**

(54) **BRANCH METRIC COMPENSATION FOR DIGITAL SEQUENCE DETECTION**

METRISCHE VERZWEIGUNGSKOMPENSATION FÜR DIGITALE FOLGEERKENNUNG

COMPENSATION METRIQUE DES BRANCHES POUR UNE DETECTION DE SEQUENCES NUMERIQUES

(84) Designated Contracting States:
**DE GB**

(43) Date of publication of application:
**04.02.1998 Bulletin 1998/06**

(73) Proprietor: **Seagate Technology LLC
Scotts Valley, CA 95066 (US)**

(72) Inventors:
• **TSANG, Kinhang P.
Plymouth, MN 55441 (US)**
• **KOST, Robert E.
Minneapolis, MN 55409 (US)**
• **BURNS, Kenneth R.
Bloomington, MN 55437 (US)**

(74) Representative: **Kenyon, Sarah Elizabeth et al
Miller Sturt Kenyon
9 John Street
London WC1N 2ES (GB)**

(56) References cited:
WO-A-94/00843    WO-A-94/29989
US-A- 5 341 387

• IEEE COMMUNICATIONS MAGAZINE, DEC. 1991, USA, vol. 29, no. 12, ISSN 0163-6804, pages 68-86, SIEGEL P H ET AL 'Modulation and coding for information storage' cited in the application
• IBM TECHNICAL DISCLOSURE BULLETIN, vol. 32, no. 7, December 1989 NEW YORK, US, pages 428-431, ANONYMOUS 'Sequential Projection Decoding for Class IV Partial Response Channels'
• PATENT ABSTRACTS OF JAPAN vol. 018 no. 364 (E-1575) ,8 July 1994 & JP,A,06 097769 (NEC CORP) 8 April 1994,

## Description

BACKGROUND OF THE INVENTION

The present invention relates in general to information storage and retrieval systems, and more particularly, to a method and apparatus for providing branch metric compensation for sequence detection in partial response channels in a digital magnetic recording system.

In digital magnetic recording systems, data is recorded in a moving magnetic media layer by a storage, or "write" electrical current-to-magnetic field transducer, or "head", positioned immediately adjacent thereto. The data is stored or written to the magnetic media by switching the direction of flow of a substantially constant magnitude write current which flows through windings in the write transducer. Each write current direction transition results in a reversal of the magnetization direction in that portion of the magnetic media just passing by the transducer during current flow in the new direction, with respect to the magnetization direction in the media induced by the previous current flow in the opposite direction. In one scheme, a magnetization direction reversal over a portion of the media moving past the transducer represents a binary digit "1", and the lack of any reversal in that portion represents a binary digit "0".

When data is to be recovered, a retrieval, or "read" magnetic field- to-voltage transducer, (which may be the same as the write transducer if both are inductive) is positioned to have the magnetic media, containing previously stored data, pass thereby such that flux reversal regions in that media either induce, or change a circuit parameter to provide a voltage pulse to form an output read signal for that transducer. In the scheme described above, each such voltage pulse due to the magnetization in corresponding media portions represents a binary digit "1" and the absence of a pulse in correspondence with such portions represents a binary digit "0".

In digital magnetic recording systems using peak detection of such voltage pulses as the data recovery method to digitize the read signal, the times between voltage pulses are used to reconstruct the timing information used in recording the data previously stored in the magnetic media to define the path portions described above. More specifically, the output of such a peak detector is used as an input signal to a phase-locked loop forming a controlled oscillator, or phase-lock oscillator (PLO), or synchronizer, which produces an output clock signal from the positions of the detected peaks of the read signal. Absolute time is not used in operating the data retrieval system since the speed of the magnetic media varies over time which results in nonuniform time intervals between read signal voltage pulses.

A data encoding scheme known as run-length-limited (RLL) coding is commonly used to improve the PLO's reconstructed clock signal accuracy based on avoiding drift in the frequency thereof because of too much time between voltage read signal pulses. When RLL code is employed, the time durations between read signal voltage pulse transitions is bounded, that is, the number of binary digits of value "0" that can separate binary digits of value "1" in the read signal is limited. This constraint is known overall as a (d, k) constraint where the individual constraint "d" represents the minimum run length of zeros, or the number thereof between ones, while the individual constraint "k" represents the maximum run length of zeros permitted. The "d" portion of the constraint can be chosen so as to avoid crowding of voltage pulses in the read signals which can reduce intersymbol interference problems in which portions of read signal voltage pulses overlap. By limiting the number of consecutive zeros, the "k" constraint maintains the reliability of the PLO in providing an accurate clock signal for the retrieval system. An automatic gain control (AGC) system is used to maintain signal amplitude for the PR4 channel, and the "k" restraint also maintains the reliability of the AGC.

In digital magnetic recording systems employing partial response (PR) signaling, which involves the acceptance of intersymbol interference, data recovery is achieved by periodically sampling the amplitude of the read transducer output signal, as initiated by clock pulses of the PLO, to digitize that signal. In this scheme, each clock pulse of the PLO initiates a sample which has a value contributed to it by more than one pulse in the transducer read signal. Accordingly, a partial response detection system for a PR channel is designed to accommodate the effects of such intersymbol interference, and therefore the "d" constraint may not be necessary (i.e. d=0). The "k" constraint is still necessary in PR signalling because the PLO is still used to provide timing for sampling the read signal, and because the AGC is used to maintain sample amplitude in connection with the PR channel.

A Class 4 PR channel, which is typically the selected frequency response chosen for the signal channel through which the read signal passes prior to detection thereof, is particularly suitable for magnetic recording with typical pulse characteristics because the channel requires very little equalization to achieve an overall match of this Class 4 response. In a Class 4 PR channel for typical pulse characteristics. signal samples are independent of their immediately neighboring samples, but are dependent on samples 2 clock samples away. The read samples are submitted to a Viterbi detector which generates the data that most likely produces the sample values. More particularly, the clock captures digital sample values using an analog-to-digital converter (ADC) where each sample value may be the summing result of more than one pulse read from the magnetic media. These samples are transformed by signal processing techniques to match certain target values. It is based on these transformed samples that the Viterbi detector or other sequence detector recovers the data.

Once a particular signalling scheme is chosen, the structure of the Viterbi detector is configured according to a state diagram for the signalling scheme. A state diagram in the form of a trellis is particularly suitable for a Viterbi detector since it incorporates the time element. An output/input relation is associated with each branch of the trellis. The target value based on an input for a particular branch of the trellis is known as the metric for that branch. A two state Viterbi decoder fits each of the time indexed sample values at the channel output with two allowable channel output sequences. One allowable output sequence minimizes the sum of squared errors over all possible noiseless output sequences ending in a first state of the trellis at time k. The other allowable output sequence minimizes the sum of squared errors over all possible noiseless output sequences ending in a second state of the trellis at time k. The Viterbi detector keeps track of the minimum cumulative branch metric for each state through the trellis over a predetermined time period for determining the path which best fits the sample data to the target values. A complete description of partial response channels, coding techniques and Viterbi detection is available, for example, in "Modulation and Coding for Information Storage" by Paul Siegel and Jack Wolf. IEEE Communications Magazine, December 1991, at pages 68-86.

As mentioned above, partial response signalling is to equalize a voltage pulse read from the magnetic media to a certain target value and apply linear superposition to a combination of pulses in order to record more in a given area on the magnetic disc. Each target value of the read back signal from the disc is the linear sum of pulses considered in the signalling scheme. However, one of the problems in high density recording, such as in a partial response signaling, is that the read back waveform is not merely the linear sum of pulses. A magnetic transition on the media may be nonlinearly affected by adjacent transitions in both the write and the read processes so that the read back waveform is distorted. Since the amplitude and location of a read back pulse may be nonlinearly distorted by any nearby magnetic transitions, it is desirable to provide a detection scheme which takes into account and corrects for such magnetic distortions.

SUMMARY OF THE INVENTION

According to a first aspect of the present invention, there is provided a method of detecting and recovering a data sequence of bits of binary data ($[A_1$...., $A_k$...., $A_n]$) to be stored on a storage medium (12) as a sequence of bits ($B_1$...., $B_k$...., $B_n$) precoded according to a signalling scheme; said method comprising:

determining a voltage pulse signal from, and which is dependent upon magnetic transitions in, the storage medium;
converting said voltage pulse signal to a sequence of digital sample values ($X_1$...., $X_k$...., $X_n$);
applying a Viterbi algorithm to said sequence of digital sample values ($X_1$...., $X_k$...., $X_n$) using target values ($Y_k$) to recover said bit data sequence and thereby generate a data output sequence ($[a_1$...., $a_k$...., $a_n]$);
characterised by either:

additionally incorporating values consecutively leading ($X_{k-1}$) and/or trailing ($X_{k+1}$) a current value ($X_k$) from said sequence of digital sample values ($X_1$...., $X_k$...., $X_n$) in each branch metric calculation in order to compensate for non-linear interference in said voltage pulse signal by providing additional states in said Viterbi algorithm and by selecting said target values ($Y_k$) based upon measured values for each branch of the algorithm, or

additionally incorporating a value from the consecutive trailing ($X_{k+1}$) value to a current value ($X_k$) from said sequence of digital sample values ($X_1$...., $X_k$...., $X_n$) in the branch metric calculation and a value from the consecutive leading ($X_{k-1}$) value in the previous branch metric calculation in order to compensate for non-linear interference in said voltage pulse signal by providing additional states in said Viterbi algorithm and by selecting said target values ($Y_k$) based upon measured values for each branch of the algorithm.

BRIEF DESCRIPTION OF THE DRAWINGS

Figure 1A is a block diagram of a digital magnetic recording system employing a Viterbi detector.

Figure 1B is a block diagram of a prior art precoder for use in the block diagram of Figure 1A.

Figure 2A is a predetermined state transition diagram in table form for use in a Viterbi detector in a Class 4 partial response channel with a $1-D^2$ precoder as known in the prior art.

Figure 2B is a trellis diagram of the state transition table of Figure 2A.

Figure 3A is a predetermined state transition diagram in table form for use in a Viterbi detector in a Class 4 partial response channel with a $1-D^2$ precoder, in accordance with the principles of the present invention.

Figure 3B is a trellis diagram of the state transition table of Figure 3A.

Figures 4A - 4D are a predetermined state transition diagram in table form for use in a Viterbi detector in a Class 4 partial response channel with a $1-D^2$ precoder, in accordance with the principles of the present invention.

Figure 4E is a trellis diagram of the state transition table of Figures 4A - 4D.

## DETAILED DESCRIPTION OF THE PREFERRED EMBODIMENTS

### Overview

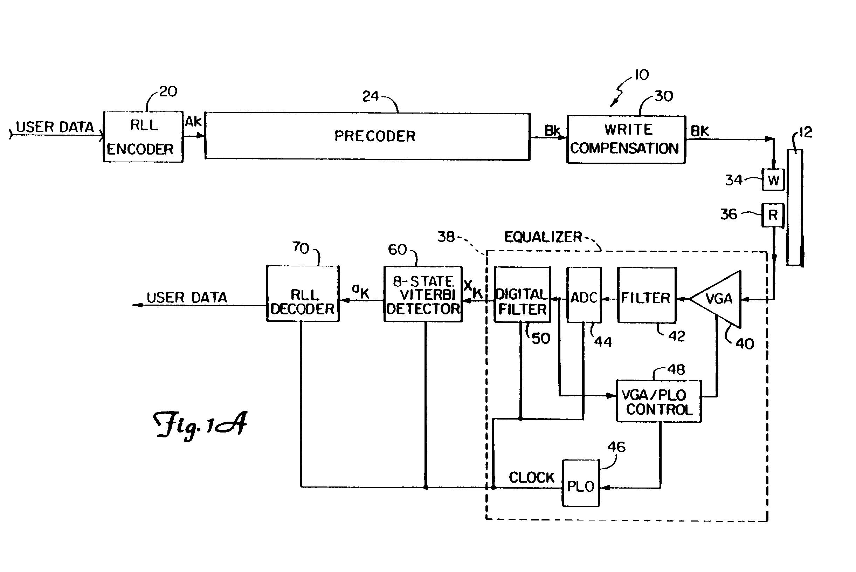

Figure 1A is a block diagram of a magnetic recording storage and retrieval system which is generally indicated at 10. The magnetic storage and retrieval system 10 includes a magnetic disc media 12 for storing user data in the form of a sequence of binary data bits, write operation circuitry for writing the sequence of binary data bits to the magnetic disc media 12, and read operation circuitry for reading back the sequence of binary data bits from the magnetic disc media 12.

### The Write Operation

The write operation circuitry includes a run-length-limited (RLL) encoder 20, a precoder 24, a write compensation circuit 30, and a write transducer 34. For the write operation, incoming user data in the form of binary data bits is input into the RLL encoder 20. The output of the RLL encoder 20 is input into the precoder 24. The output of the precoder 24 is connected to the write compensation circuit 30. The output of the write compensation 30 then drives the write transducer 34 for writing data onto the magnetic disc media 12.

More particularly, the encoder 20 performs a one-to-one mapping of the unconstrained user data sequence to a constrained sequence, denoted $[A_1, ..., A_k, ..., A_n]$. In other words, the output of the encoder 20 is a binary data sequence which has the number of consecutive binary digits "0" bounded so that the sequence $[A_1, ..., A_k, ..., A_n]$ satisfies the (d, k) constraints mentioned above. The (d, k) constraints guarantee that the time duration between pulses of the waveform read back from the magnetic disc media 12 is limited so that the phase lock loop (PLO) maintains the clock accuracy and so that the automatic gain control (AGC) keeps the signal amplitude stable for the data retrieval (read) operation.

The sequence $[A_1, ... A_k, ..., A_n]$ is then passed through the precoder 24 which generates a write waveform sequence $[B_1, ..., B_k, .... B_n]$, which has a simple and direct mathematical relation to the sequence $[A_1, ..., A_k, ..., A_n]$. The write sequence $[B_1, ..., B_k, ..., B_n]$ provides a two-level write current which means that transition sequences of "01" or "10" in adjacent $B_k$ cause the write current to reverse direction. The exact timing of reversals of the write current is further modified by the write-compensation circuit 30 in order to shape the pulses read back from the magnetic disc media 12 to occur at a time which better fits the particular detection scheme being employed. The write compensation circuit 30 uses delay elements to adjust the reversal time of the write current depending on how far away the previous and upcoming transitions are with respect to each other, as is well known to those skilled in the art. Write current from the compensation circuit 30 then flows to an inductive coil winding of the write head transducer 34 to magnetize the magnetic media 12 accordingly.

### The Read operation

The read operation circuitry includes a read transducer 36 (which may be the same as the write transducer 34 if both are inductive), an equalizer circuit 38, a Viterbi detector 60, and an RLL decoder 70. The read transducer 36 is connected to the equalizer circuit 38. The output of the equalizer circuit 38 is input into the Viterbi Detector 60. The output of the Viterbi detector 60 is then input into the RLL decoder 70 for returning the user data.

The equalizer 38 includes a voltage gain amplifier (VGA) 40, an analog filter 42. an analog-to-digital converter (ADC) 44, a phase lock loop (PLO) 46, a VGA/PLO control 48, and a digital filter 50. The output of the read transducer 36 is connected to the input of the VGA 40. The output of the VGA 40 is connected to the input of the analog filter 42. The output of the analog filter 42 is connected to the input of the ADC 44. The output of the ADC 44 is connected to the input of the digital filter 50. The output of the digital filter 50 is then connected to the input of the Viterbi detector 60. The input of the VGA/PLO control 48 is taken from the output of the ADC 44. The output of the VGA/PLO control 48 controls the VGA 40 and the PLO 46. The output of the PLO 46 clocks the ADC 44, digital filter 50, Viterbi detector 60, and RLL decoder 70.

The read or data retrieval operation begins with the read head transducer 36 producing a voltage pulse signal. The voltage pulse signal is induced in the read head transducer 36 by the magnetic flux on the magnetic disc media 12 which results from transition regions on the magnetic media 12. The equalizer circuit 38 equalizes the voltage signal to a Class 4 partial response channel. The voltage signal is then regulated by the voltage gain amplifier (VGA) 40 which maintains the amplitude of the read back signal. The analog filter 42 then removes high frequency noise from the read back signal. The filtered analog signal is converted into a digital value by the ADC 44 which is latched at the rising edge of a read clock signal. These digital sample values in turn control the VGA/PLO control 48 and the PLO 46 which generates the read clock signal accordingly. The equalization of the read back waveform is well known to those skilled in the art.

The digital sample values from the ADC 44 are shifted into the digital filter 50 which is configured in the form of a transversal filter. In the transversal digital filter 50, each digital sample from the ADC 44 is summed with a preceding sample which has been weighted and a trailing sample which has been weighted. The weights in the digital filter 50 are designed to transform the digital samples of the read back sequence to match certain target values within the detection scheme. The output sample values of the digital filter 50, denoted $[X_1, ..., X_k, ..., X_n]$, is then shifted into the Viterbi detector 60 for detection of a sequence $[a_1, ..., a_k, ..., a_n]$ which best fits the read back signal sample values $[X_1, ..., X_k, .... X_n]$. The Viterbi detector 60 thereby identifies the original sequence $[A_1, .... A_k, ..., A_n]$ with as high a degree of certainty as possible.

The Viterbi detector 60 is modeled from a state diagram. In the state diagram a current state at time k (represented by symbols $B_{k-2}$ and $B_{k-1}$ of the write sequence $[B_1, ..., B_k, ..., B_n]$) and a target input. $Y_k$ (used in making comparisons to a sample $X_k$ of the read back signal sample values $[X_1, .... X_k, ..., X_n]$), are linked to an output (represented by $a_k$ of the estimated sequence $[a_1, ..., a_k, ..., a_n]$) and a next state (represented by symbols $B_{k-1}$ and $B_k$ of the write sequence $[B_1, ..., B_k, ..., B_n]$). The state diagram and table are expressed in the form of a trellis within the Viterbi detector 60 for determining the most probable state transition for each time period k. The path between a current state and a next state within the trellis is called a branch. Each branch has associated therewith the target input value $Y_k$ corresponding to a probable bit of the read back sample values $[X_1, ..., X_k, ..., X_n]$. Along each branch of the trellis, a sample value $X_k$ of the read back sequence is compared to the metric target value $Y_k$ for that branch. This comparison is repeated for all branches merging into a next state for a given time period k. The trellis branch having the minimum sum of the square of the difference between each $X_k$ and $Y_k$, i.e. $(X_k - Y_k)^2$ plus the cumulative sum of the error squared of the state from which the branch emerged, thereby measuring the "closeness" of the sample $X_k$ to the branch metric target value $Y_k$, is determined to be a winner (survivor) at time period k. By using the minimum cumulative metric sum of the concatenating branches leading to each state for each time k, the Viterbi detector 60 maps a surviving path through the trellis. This surviving path yields the data sequence $[a_1, ..., a_k, ..., a_n]$ that best matches with the filtered read back sample values $[X_1, ..., X_k, ..., X_n]$. In other words, the Viterbi detector 60 finds an estimated sequence $[a_1, ..., a_k, ..., a_n]$ which most likely produced the read-sampled sequence $[X_1, ..., X_k, ..., X_n]$ and which therefore is the best possible representation of the original sequence $[A_1, .... A_k, ..., A_n]$.

The estimated sequence $[a_1, ...., a_k, ..., a_n]$ is then shifted into the RLL decoder 70 which performs a reverse mapping of the RLL sequence to recover the user data. as is well known to those skilled in the art.

According to the present invention, the state diagram used to construct the Viterhi detector 60 is now extended to map through the trellis structure a leading (past) voltage pulse transition of the read back waveform sample values $[X_1, ..., X_k, ..., X_n]$ and a trailing (future) voltage pulse transition of the read back waveform sample values $[X_1, ..., X_k, ..., X_n]$. The present invention thereby increases the choices of $Y_k$ according to different pattern cases. In other words, instead of keeping track of only one (1) state transition of the read back waveform sample values $[X_1, ..., X_k, ..., X_n]$ at a time through the Viterbi detector 60, the present invention provides for also following a leading pulse transition and a trailing pulse transition. By looking at these additional samples the Viterbi detector 60 is able to make a better match to each sample $X_k$ of the read back waveform sample values $[X_1, ..., X_k, ..., X_n]$. The additional branches and their corresponding branch metrics more accurately represent the read back waveform by neutralizing the distortion in the time and amplitude for each voltage pulse transition which is caused by nonlinear magnetic interaction of a leading or trailing pulse to the portion of the read back waveform being mapped in the trellis. A Class 4 partial response (PR4) channel is used as an example to illustrate the branch metric compensation contemplated by the present invention. Nevertheless, this branch metric compensation method is applicable to other classes of partial response and adaptable to other types of sequence detection.

Prior Art Viterbi Detector

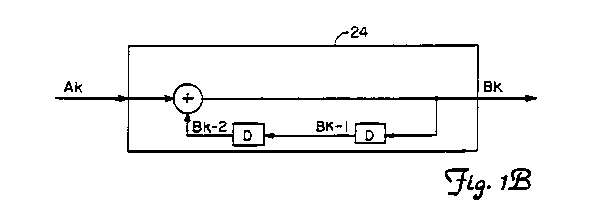

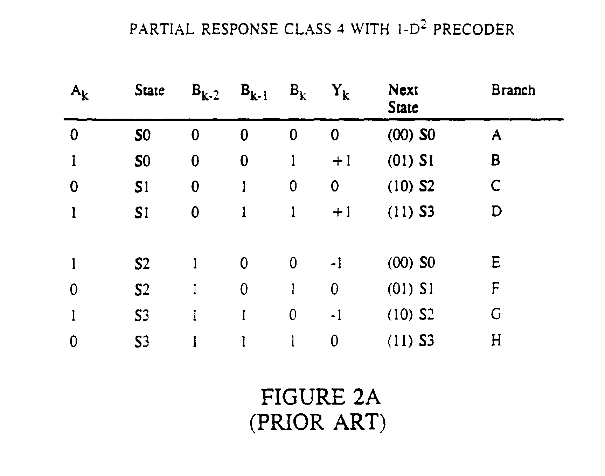

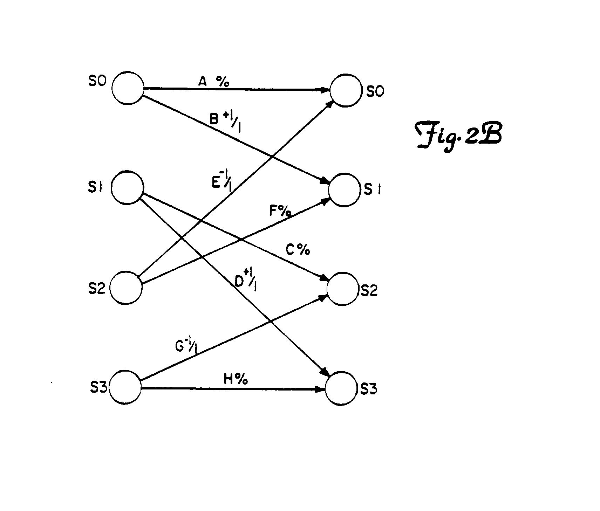

Before looking at the branch metric compensation for the leading transition pulse and trailing transition pulse. it is helpful to look at the prior art state transition table and trellis for a PR4 channel as shown in Figures 2A and 2B. The PR4 channel is also known as a $(1-D^2)$ channel since it is described by the partial response polynomial $1-D^2$. The factor $D^i$ signifies a delay of "i" sample-clock time units between bits of the write sequence $[B_1, ..., B_k, ..., B_n]$. Figure 1B shows the precoder 24' for such a system. The precoder 24' translates each bit $A_k$ of the original binary sequence $[A_1, ..., A_k, ..., A_n]$ into a corresponding bit $B_k$ of the write sequence $[B_1, ..., B_k, ..., B_n]$, where:

$$A_k = (B_{k-2}) \text{ XOR } (B_k). \qquad [1.a]$$

For purposes of encoding and decoding the write sequence $[B_1, ..., B_k, ..., B_n]$, each $B_k$ is expressed as follows:

$$B_k = (B_{k-2}) \text{ XOR } (A_k). \qquad [1.b]$$

Thus, in the prior art precoder 24' for a PR4 channel there are only two delayed versions of $B_k$ which are denoted $B_{k-1}$ and $B_{k-2}$ which are delayed versions of $B_k$ by one and two clock periods, respectively. The content of registers $B_{k-2}$ and $B_{k-1}$ changes at each clock cycle and thus represents the current state of the cycle. Accordingly, there are four (4) possible values for the current state represented by bits "$B_{k-2}B_{k-1}$". These possible values are "00", "01", "10" and "11" and they are represented in Figures 2A and 2B by the four (4) states S0, S1, S2, S3, respectively. The next state for each current state is represented by the bits "$B_{k-1}B_k$" which are again represented by the same four states S0, S1, S2 and S3. In other words, a current boundary region on the magnetic media is represented as being between bits $B_{k-2}$ and $B_{k-1}$ and the next boundary region on the magnetic media is represented as being between bits $B_{k-1}$ and $B_k$. The target value $Y_k$ for each input of $X_k$ (which is then related to $A_k$ by equation [1.a]) is obtained by applying the polynomial $1-D^2$ to $B_k$, so that:

$$Y_k = B_k - B_{k-2}. \qquad [2]$$

Figure 2A shows a list of all possible $B_k$ sequences for three consecutive time periods, a current state. a next state, a target value $Y_k$, the output value $A_k$, and a branch A-H. The list of all possible $B_k$ sequences is denoted in columns $B_{k-2}$, $B_{k-1}$, and $B_k$ and each sequence is designated by one of the branches A - H. In addition, for each possible $B_{k-2}B_{k-1}B_k$ sequence the current state is designated SO - S3 (where each state is represented by bits "$B_{k-2}B_{k-1}$") and the next state is designated SO - S3 (where each state is represented by bits "$B_{k-1}B_k$"). The next state and output are determined by branch metric calculations based upon the list of all possible inputs of $A_k$ for each state and their corresponding target values $Y_k$ as mentioned above. In Figure 2A, $Y_k$ is associated with two transitions: "$B_{k-2} B_{k-1}$" and $B_{k-1} B_k$.

Figure 2B shows the table of Figure 2A in trellis form, wherein the expression for the metric and output relationship of each branch (A-H) is $Y_k/A_k$. There are two branches diverging from each current state and two branches merging at each next state. The fact that there are only two merging branches per state means that each state will only have to compare two metric sums and select one survivor at each clock cycle. Figures 2A and 2B represent the well known state diagram and trellis used in a prior art Viterbi detector for a PR4 channel.

## Viterbi Detector Accounting For Effect of Trailing Transition Pulse

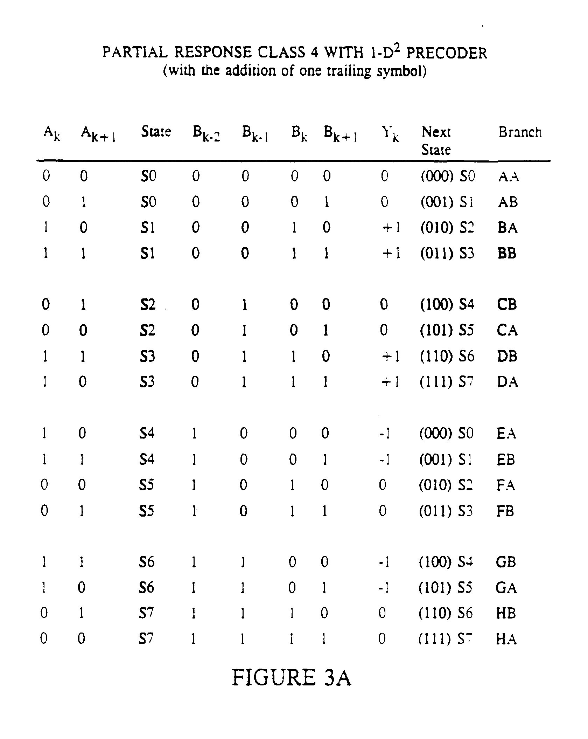

To account for the effect of the trailing (future) transition pulse according to the present invention, it is necessary to consider the transition between bits $B_k$ and $B_{k+1}$ (using the scheme discussed above with regard to Figures 2A and 2B) for the entire write sequence [$B_1$, ..., $B_k$, ..., $B_n$]. Accordingly. as shown in Figure 3A, new columns $A_{k+1}$ and $B_{k+1}$ are added to the state transition table where:

$$B_{k+1} = (B_{k-1}) \text{ XOR } (A_{k+1}) \qquad [3.a]$$

or:

$$A_{k+1} = (B_{k-1}) \text{ XOR } (B_{k+1}) \qquad [3.b]$$

To keep the number of diverging or merging branches at two per state, the number of states is doubled from four (S0-S3) in Figure 2A to eight (S0-S7) in Figure 3A. The current state is represented by the three binary digits "$B_{k-2}B_{k-1}B_k$" and the next state is represented by the three binary digits "$B_{k-1}B_kB_{k+1}$". In this embodiment the precoder 24 (see Figure 1B) is used to provide $B_{k-2}$ and $B_{k-1}$ as described above.

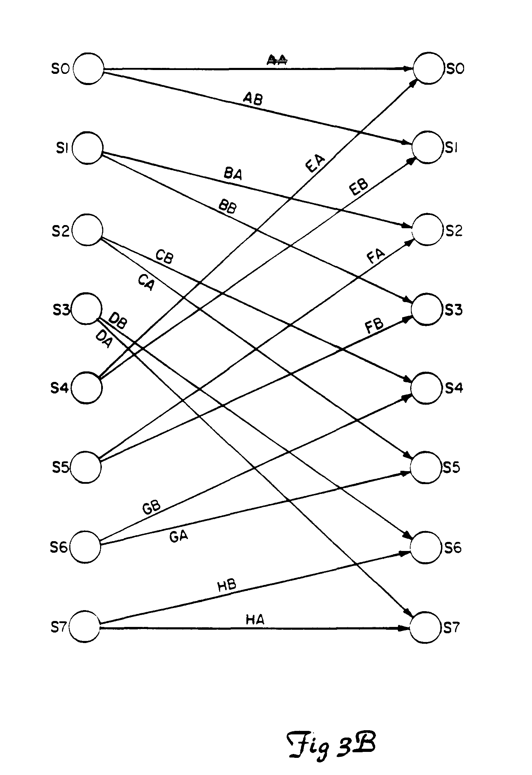

Referring to Figures 3A and 3B, at each clock cycle a state must select a merging branch that yields the minimum cumulative metric sum for the next state. Limiting the merging branches to two (2) per state helps maintain the branch selection time to within one cycle. Assuming linear superposition of the pulses, the $Y_k$ column is again obtained by applying equation [2] above. As the number of states (S0-S7) is doubled, the total number of branches (AA-HA) is also doubled, when compared to the prior art state diagram shown in Figures 2A and 2B. In this arrangement, $Y_k$ is associated with three transitions: "$B_{k-2} B_{k-1}$", $B_{k-1} B_k$", $B_k B_{k+1}$". In an ideal environment where there is no distortion, the possible noiseless values of $Y_k$ are -1, 0, +1 as shown in the Figures. By choosing the appropriate statistical average of actual measured values of $Y_k$ for each branch, the non-linear distortion of the pulses can be corrected. Thus, the state transition and trellis in Figures 3A and 3B provide a scheme for a more accurate and improved Viterbi detector 60 compared to that in Figures 2A and 2B. because the effects of a possible trailing transition pulse on the current transition region is now considered.

## Viterbi Detector Accounting For Effect of Leading Transition Pulse

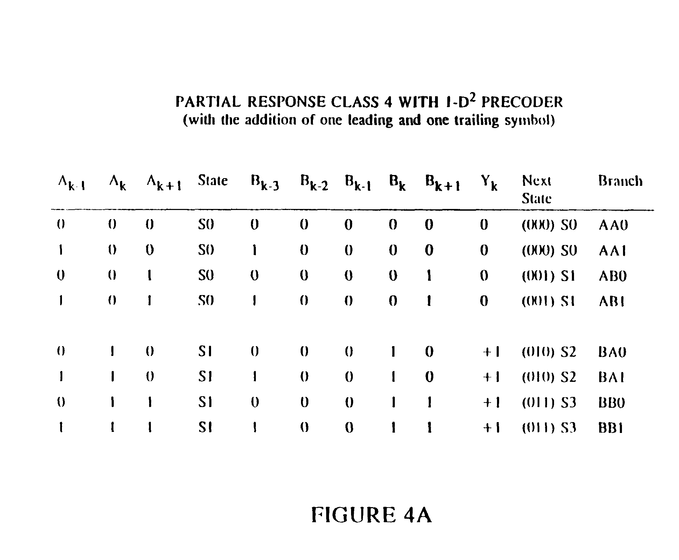

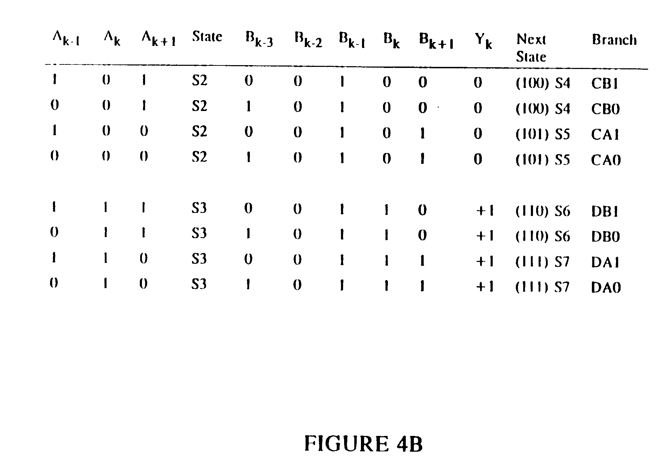

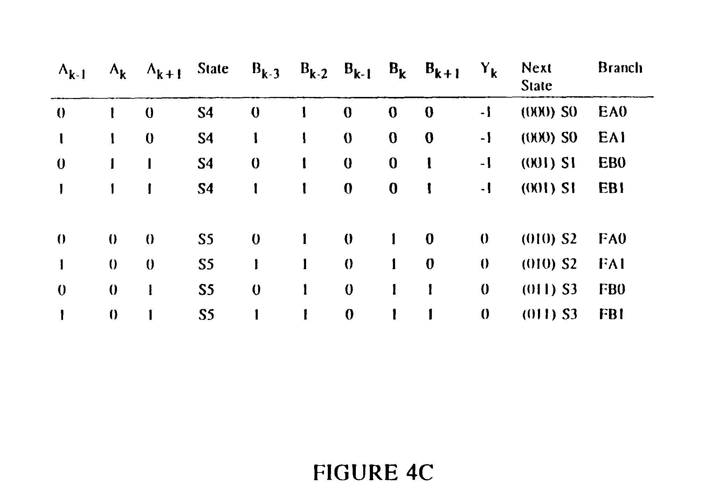

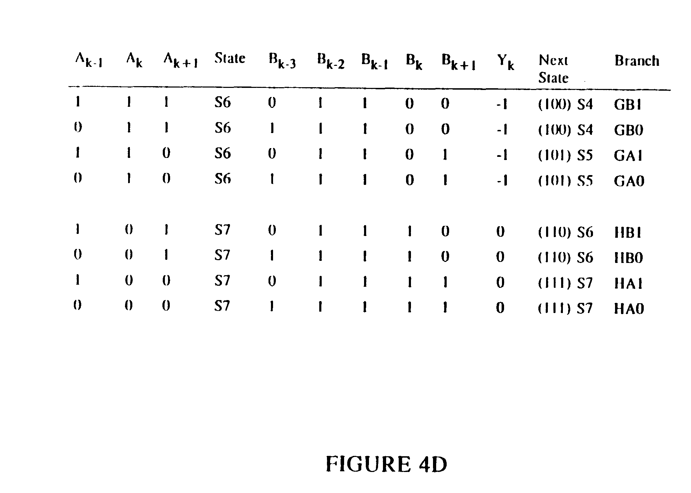

To account for the effect of the leading (past) transition pulse according to the present invention, it is necessary to consider the transition between bits $B_{k-3}$ and $B_{k-2}$ (using the scheme discussed above with regard to Figures 2A, 2B, 3A and 3B) for the entire write sequence [$B_1$, .... $B_k$, ..., $B_n$]. Accordingly, as shown in Figures 4A - 4D, new columns $A_{k-1}$ and $B_{k-3}$ are added to the state transition table shown in Figure 3A, where:

$$B_{k-3} = (B_{k-1}) \text{ XOR } (A_{k-1}). \qquad [4.a]$$

or:

$$A_{k-1} = (B_{k-1}) \text{ XOR } (B_{k-3}). \qquad [4.b]$$

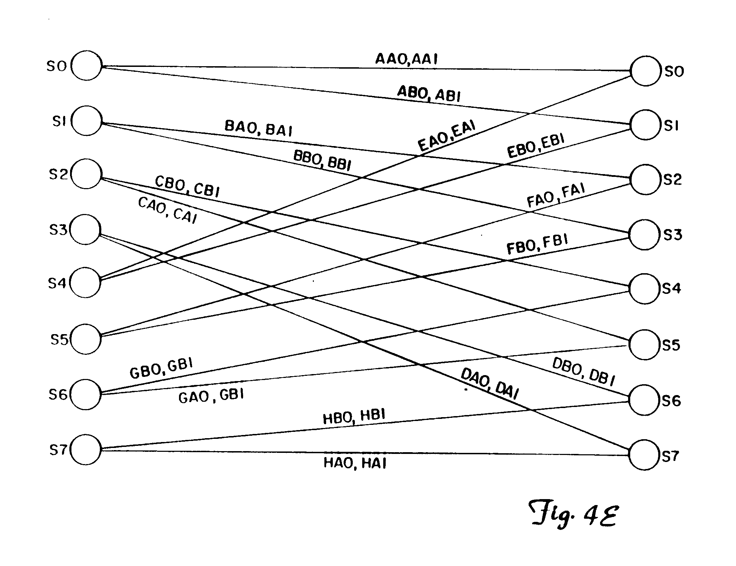

Figure 4E shows the state diagram in trellis form for the table in Figures 4A - 4D. While it would seem logical that an additional 8 states are necessary to track the addition of the leading transition pulse, the number of states is kept at eight (8), as in Figures 3A and 3B, while the number of merging branches to each state is increased. This is made possible because the branch metrics associated with the leading (past) transition pulse have already been measured at an earlier time period.

The sample precoder 24 is used here but the state diagram has to consider three (3) delayed versions of $B_k$ which are denoted $B_{k-1}$, $B_{k-2}$, and $B_{k-3}$ which are delayed versions of $B_k$ by one, two and three clock periods, respectively.

Even more, while the number of merging branches is now apparently increased to four (4) per state, branches between any two particular states are in two pairs and the selection process for each pair is further simplified according to the present invention. Information bit $A_{k-1}$ reflects the previous selected output for each state as determined at the previous clock cycle. Since the information bit $A_{k-1}$ has already been determined. it is possible to determine whether Branch "**0" or Branch "**1" should be used in determining the minimum cumulative branch metric for each of the two branch pairs between any two states. More particularly, it is noted that in the last column of the table in Figures 4A - 4D, a Branch having a label ending in '--0' corresponds to "$A_{k-1}$ = 0" and a Branch having label ending in '--1' corresponds to "$A_{k-1}$ = 1". Therefore, for a branch pair going from state "m" to state "n", bit $A_{k-1}$ of state 'm' is used as a select signal to determine which of the two branches (metrics) should be used. This shortcut technique essentially keeps the compare and select process within the Viterbi detector 60 at two branches per state and preserves the process time.

The $Y_k$ column in Figures 4A - 4D is again the linear superposition of ($B_k$ - $B_{k-2}$) as indicated in equation [2] above. In this arrangement, $Y_k$ is associated with four transitions: "$B_{k-3}$ $B_{k-2}$", $B_{k-2}$ $B_{k-1}$", "$B_{k-1}$ $B_{k-1}$", and $B_k$ $B_{k+1}$". In recording systems where the read back pulses interact nonlinearly, the resultant read sample values [$X_1$, ..., $X_k$, ..., $X_n$] will deviate from the $Y_k$ targets. To find the suitable target values for such a recording system, a predetermined pseudo random pattern including all possible branches is written to the magnetic media 12. Samples are taken and a statistical average for each $Y_k$ is determined for each branch. These new target values are then used in the Viterbi detector 60 as described above.

In sum, by utilizing a state transition table which takes into account the adjacent leading and/or trailing transition regions about the current magnetization region, the Viterbi detector 60 accounts for and remedies the nonlinear distortion in amplitude and/or time which occurs on the magnetic media 12. A significant improvement in the error rate has been observed (approximately 2 orders of magnitude) in a test system employing the present invention as described above. It is to be understood that the branch metric compensation method presented here is a general procedure. The method can be applied to other popular signaling schemes such as the extended PR4 systems that have partial response polynomials of the form $(1-D)(1+D)^n$, where "n" is a positive integer greater than 1. It should also be noted that, in practice, the full-blown state diagram of branch metric compensation can usually be simplified. For example, some branch pairs may show very small differences so that they may be considered as one single branch. Such simplifications are generally system and channel dependent so they should be implemented according to the individual situation.

The aforegoing description has been given by way of example only and it will be appreciated by a person skilled in the art that modifications can be made without departing from the scope of the present invention.

## Claims

1. A method of detecting and recovering a data sequence of bits of binary data ([$A_1$...., $A_k$...., $A_n$]) to be stored on a storage medium (12) as a sequence of bits ($B_1$...., $B_k$...., $B_n$) precoded according to a signalling scheme; said method comprising:

    determining a voltage pulse signal from, and which is dependent upon magnetic transitions in, the storage medium;
    converting said voltage pulse signal to a sequence of digital sample values ($X_1$...., $X_k$...., $X_n$);
    applying a Viterbi algorithm to said sequence of digital sample values ($X_1$...., $X_k$...., $X_n$) using target values ($Y_k$) to recover said bit data sequence and thereby generate a data output sequence ([$a_1$...., $a_k$...., $a_n$]);

    characterised by either:

    additionally incorporating values consecutively leading ($X_{k-1}$) and/or trailing ($X_{k+1}$) a current value ($X_k$) from said sequence of digital sample values ($X_1$...., $X_k$...., $X_n$) in each branch metric calculation in order to compensate for non-linear interference in said voltage pulse signal by providing additional states in said Viterbi algorithm and by selecting said target values ($Y_k$) based upon measured values for each branch of the algorithm,
    or additionally incorporating a value from the consecutive trailing ($X_{k+1}$) value to a current value ($X_k$) from said sequence of digital sample values ($X_1$...., $X_k$...., $X_n$) in the branch metric calculation and a value from the consecutive leading ($X_{k-1}$) value in the previous branch metric calculation in order to compensate for non-linear interference in said voltage pulse signal by providing additional states in said Viterbi algorithm and by selecting said target values ($Y_k$) based upon measured values for each branch of the algorithm.

2. A method as claimed in claim 1, wherein the signalling scheme comprises the partial response polynomial '1-$D^2$', such that a target value ($Y_k$) for each stake is the difference ($B_k - B_{k-2}$) between a bit ($B_k$) in a write sequence ([$B_1$ ..., $B_k$ ..., $B_n$]) at a sample clock time and a bit ($B_{k-2}$) in the write sequence delayed by two sample clock periods, and the additional states represent a bit ($B_{k+1}$) trailing by one sample clock period and/or a bit ($B_{k-3}$) leading by one sample clock period.

3. A method as claimed in claim 2, wherein the number of states at a sample clock time is eight.

4. A method as claimed in claim 3, wherein the number of states at a sample clock time is eight and each state has associated therewith four diverging branches, and each state at a next sample clock time has four merging branches associated therewith.

5. A method as claimed in claim 2, wherein the number of states at a sample clock time is sixteen.

## Patentansprüche

1. Verfahren zur Erkennung und Rückgewinnung einer Datenfolge von Bits von Binärdaten ([$A_1$...., $A_k$...., $A_n$]), die auf einem Speichermedium (12) als eine Folge von Bits ($B_1$...., $B_k$...., $B_n$) zu speichern sind, die entsprechend einem Signalisierungsschema vorkodiert sind, wobei das Verfahren folgendes umfaßt:

Bestimmung eines Spannungsimpulssignals von dem Speichermedium, das von magnetischen Übergängen in dem Speichermedium abhängig ist,

Umwandeln des Spannungsimpulssignals in eine Folge von digitalen Abtastprobenwerten ($X_1$...., $X_k$...., $X_n$),

Anwenden eines Viterbi-Algorithmus auf die Folge von digitalen Abtastprobenwerten ($X_1$...., $X_k$...., $X_n$), unter Verwendung von Zielwerten ($Y_k$) zur Rückgewinnung der Datenbitfolge und damit zur Erzeugung eines Ausgangs-Datenfolge ([$a_1$...., $a_k$...., $a_n$]),

gekennzeichnet durch entweder:

Zusätzliches Einfügen von Werten, die aufeinanderfolgend einem derzeitigen Wert ($X_k$) von der Folge von digitalen Abtastprobenwerten ($X_1$...., $X_k$...., $X_n$) voreilen ($X_{k-1}$) und/oder nacheilen ($X_{k+1}$) in jeder Verzweigungsmetrik-Berechnung zur Kompensation einer nicht-linearen Störung in dem Spannungsimpulssignal durch Schaffung zusätzlicher Zustände in dem Viterbi-Algorithmus und durch Auswählen der Zielwerte ($Y_k$) auf der Grundlage von gemessenen Werten für jeden Zweig des Algorithmus, oder

Zusätzliches Einfügen eines Wertes von dem aufeinanderfolgenden nacheilenden ($X_{k+1}$) Wert zu einem derzeitigen Wert ($X_k$) von der Folge von digitalen Abtastprobenwerten ($X_1$...., $X_k$...., $X_n$) in der Verzweigungmetrik-Berechnung und eines Wertes von dem aufeinanderfolgenden voreilenden ($X_{k-1}$) Wert in der vorhergehenden Verzweigungsmetrik-Berechnung, um nicht-lineare Störungen in dem Spannungsimpulssignal durch Schaffung zusätzliche Zustände in dem Viterbi-Algorithmus und durch Auswahl der Zielwerte ($Y_k$) auf der Grundlage gemessener Werte für jeden Zweig des Algorithmus zu kompensieren.

2. Verfahren nach Anspruch 1, bei dem das Signalisierungsschema das Teilantwort-Polynom '1-$D^2$' derart umfaßt, daß ein Zielwert ($Y_k$) für jeden Zustand die Differenz ($B_k - B_{k-2}$) zwischen einem Bit ($B_k$) in einer Schreibfolge ($B_1$...., $B_k$...., $B_n$) bei einer Abtasttaktzeit und einem Bit ($B_{k-2}$) in der Schreibfolge verzögert um zwei Abtasttaktperioden ist, und die zusätzlichen Zustände ein Bit ($B_{k+1}$), das um eine Abtasttaktperiode nacheilt, und/oder ein Bit ($B_{k-3}$) darstellen, das um eine Abtasttaktperiode voreilt.

3. Verfahren nach Anspruch 2, bei dem die Anzahl der Zustände bei einer Abtasttaktzeit gleich acht ist.

4. Verfahren nach Anspruch 3, bei dem die Anzahl der Zustände bei einer Abtasttaktzeit gleich acht ist und jedem Zustand vier divergierende Zweige zugeordnet sind, und wobei jeder Zustand bei einer nächsten Abtasttaktzeit vier ihm zugeordnete, zusammenlaufende Zweige aufweist.

5. Verfahren nach Anspruch 2, bei dem die Anzahl der Zustände bei einer Abtasttaktzeit gleich sechzehn ist.

## Revendications

**1.** Procédé de détection et de reconstitution d'une séquence de données constituée de bits de données binaires ($[A_1..., A_k..., A_n]$) qui doit être stockée sur un support de stockage (12) comme une séquence de bits ($B_1..., B_k..., B_n$) précodée en conformité avec une configuration de signalisation ; ledit procédé comprenant les étapes consistant à :

déterminer un signal impulsionnel de tension provenant du support de stockage, et qui est fonction des transitions magnétiques dans celui-ci ;
convertir ledit signal impulsionnel de tension en une séquence de valeurs d'échantillons numériques ($X_1..., X_k..., X_n$) ;
appliquer un algorithme de Viterbi à ladite séquence de valeurs d'échantillons numériques ($X_1..., X_k..., X_n$) en utilisant des valeur cibles ($Y_k$) pour reconstituer ladite séquence de données binaires et pour produire de ce fait une séquence de sortie de données ($[a_1..., a_k..., a_n]$) ;

caractérisé par l'étape consistant à :

soit incorporer de manière supplémentaire des valeurs consécutivement précédant ($X_{k-1}$) et/ou suivant ($X_{k+1}$) une valeur courante ($X_k$) à partir de ladite séquence de valeurs d'échantillons numériques ($X_1..., X_k..., X_n$) dans chaque calcul métrique de branche afin de compenser l'interférence non-linéaire dans ledit signal impulsionnel de tension en procurant des états supplémentaires dans ledit algorithme de Viterbi et sélectionner lesdites valeurs cibles ($Y_k$) sur la base des valeurs mesurées pour chaque branche de l'algorithme,
soit incorporer de manière supplémentaire une valeur depuis la valeur suivante consécutive ($X_{k+1}$) à une valeur courante ($X_k$) à partir de ladite séquence de valeurs d'échantillons numériques ($X_1..., X_k..., X_n$) dans le calcul métrique de branche et une valeur à partir de la valeur précédente consécutive ($X_{k-1}$) dans le calcul métrique de branche précédente afin de compenser l'interférence non-linéaire dans ledit signal impulsionnel de tension en procurant des états supplémentaires dans ledit algorithme de Viterbi et sélectionner lesdites valeurs cibles ($Y_k$) sur la base des valeurs mesurées pour chaque branche de l'algorithme.

**2.** Procédé selon la revendication 1, dans lequel la configuration de signalisation comprend le polynôme à réponse partielle "1-$D^2$", tel qu'une valeur cible ($Y_k$) pour chaque état est la différence ($B_k$-$B_{k-2}$) entre un bit ($B_k$) dans une séquence d'écriture ($[B_1..., B_k..., B_n]$) à un temps d'horloge d'échantillonnage et un bit ($B_{k-2}$) dans la séquence d'écriture retardée de deux périodes d'horloge d'échantillonnage et les états supplémentaires représentent un bit ($B_{k+1}$) retardé d'une période d'horloge d'échantillonnage et/ou un bit ($B_{k-3}$) en avance d'une période d'horloge d'échantillonnage.

**3.** Procédé selon la revendication 2, dans lequel le nombre des états au temps d'horloge d'échantillonnage est de huit.

**4.** Procédé selon la revendication 3, dans lequel le nombre des états au temps d'horloge d'échantillonnage est de huit et à chaque état est associé quatre branches divergentes, et chaque état au temps d'horloge d'échantillonnage suivant comporte quatre branches réunies qui lui sont associées.

**5.** Procédé selon la revendication 2, dans lequel le nombre des états au temps d'horloge échantillonnage est de seize.

Fig. 1A

EP 0 821 827 B1

Fig. 1B

PARTIAL RESPONSE CLASS 4 WITH $1\text{-}D^2$ PRECODER

| $A_k$ | State | $B_{k-2}$ | $B_{k-1}$ | $B_k$ | $Y_k$ | Next State | Branch |
|---|---|---|---|---|---|---|---|
| 0 | S0 | 0 | 0 | 0 | 0 | (00) S0 | A |
| 1 | S0 | 0 | 0 | 1 | +1 | (01) S1 | B |
| 0 | S1 | 0 | 1 | 0 | 0 | (10) S2 | C |
| 1 | S1 | 0 | 1 | 1 | +1 | (11) S3 | D |
| 1 | S2 | 1 | 0 | 0 | -1 | (00) S0 | E |
| 0 | S2 | 1 | 0 | 1 | 0 | (01) S1 | F |
| 1 | S3 | 1 | 1 | 0 | -1 | (10) S2 | G |
| 0 | S3 | 1 | 1 | 1 | 0 | (11) S3 | H |

# FIGURE 2A
# (PRIOR ART)

EP 0 821 827 B1

Fig. 2B

13

PARTIAL RESPONSE CLASS 4 WITH $1-D^2$ PRECODER
(with the addition of one trailing symbol)

| $A_k$ | $A_{k+1}$ | State | $B_{k-2}$ | $B_{k-1}$ | $B_k$ | $B_{k+1}$ | $Y_k$ | Next State | Branch |
|---|---|---|---|---|---|---|---|---|---|
| 0 | 0 | S0 | 0 | 0 | 0 | 0 | 0 | (000) S0 | AA |
| 0 | 1 | S0 | 0 | 0 | 0 | 1 | 0 | (001) S1 | AB |
| 1 | 0 | S1 | 0 | 0 | 1 | 0 | +1 | (010) S2 | BA |
| 1 | 1 | S1 | 0 | 0 | 1 | 1 | +1 | (011) S3 | BB |
| 0 | 1 | S2 | 0 | 1 | 0 | 0 | 0 | (100) S4 | CB |
| 0 | 0 | S2 | 0 | 1 | 0 | 1 | 0 | (101) S5 | CA |
| 1 | 1 | S3 | 0 | 1 | 1 | 0 | +1 | (110) S6 | DB |
| 1 | 0 | S3 | 0 | 1 | 1 | 1 | +1 | (111) S7 | DA |
| 1 | 0 | S4 | 1 | 0 | 0 | 0 | -1 | (000) S0 | EA |
| 1 | 1 | S4 | 1 | 0 | 0 | 1 | -1 | (001) S1 | EB |
| 0 | 0 | S5 | 1 | 0 | 1 | 0 | 0 | (010) S2 | FA |
| 0 | 1 | S5 | 1 | 0 | 1 | 1 | 0 | (011) S3 | FB |
| 1 | 1 | S6 | 1 | 1 | 0 | 0 | -1 | (100) S4 | GB |
| 1 | 0 | S6 | 1 | 1 | 0 | 1 | -1 | (101) S5 | GA |
| 0 | 1 | S7 | 1 | 1 | 1 | 0 | 0 | (110) S6 | HB |
| 0 | 0 | S7 | 1 | 1 | 1 | 1 | 0 | (111) S7 | HA |

# FIGURE 3A

Fig 3B

### PARTIAL RESPONSE CLASS 4 WITH $1-D^2$ PRECODER
(with the addition of one leading and one trailing symbol)

| $A_{k-1}$ | $A_k$ | $A_{k+1}$ | State | $B_{k-3}$ | $B_{k-2}$ | $B_{k-1}$ | $B_k$ | $B_{k+1}$ | $Y_k$ | Next State | Branch |
|---|---|---|---|---|---|---|---|---|---|---|---|
| 0 | 0 | 0 | S0 | 0 | 0 | 0 | 0 | 0 | 0 | (000) S0 | AA0 |
| 1 | 0 | 0 | S0 | 1 | 0 | 0 | 0 | 0 | 0 | (000) S0 | AA1 |
| 0 | 0 | 1 | S0 | 0 | 0 | 0 | 0 | 1 | 0 | (001) S1 | AB0 |
| 1 | 0 | 1 | S0 | 1 | 0 | 0 | 0 | 1 | 0 | (001) S1 | AB1 |
| 0 | 1 | 0 | S1 | 0 | 0 | 0 | 1 | 0 | +1 | (010) S2 | BA0 |
| 1 | 1 | 0 | S1 | 1 | 0 | 0 | 1 | 0 | +1 | (010) S2 | BA1 |
| 0 | 1 | 1 | S1 | 0 | 0 | 0 | 1 | 1 | +1 | (011) S3 | BB0 |
| 1 | 1 | 1 | S1 | 1 | 0 | 0 | 1 | 1 | +1 | (011) S3 | BB1 |

# FIGURE 4A

| $A_{k-1}$ | $A_k$ | $A_{k+1}$ | State | $B_{k-3}$ | $B_{k-2}$ | $B_{k-1}$ | $B_k$ | $B_{k+1}$ | $Y_k$ | Next State | Branch |
|---|---|---|---|---|---|---|---|---|---|---|---|
| 1 | 0 | 1 | S2 | 0 | 0 | 1 | 0 | 0 | 0 | (100) S4 | CB1 |
| 0 | 0 | 1 | S2 | 1 | 0 | 1 | 0 | 0 | 0 | (100) S4 | CB0 |
| 1 | 0 | 0 | S2 | 0 | 0 | 1 | 0 | 1 | 0 | (101) S5 | CA1 |
| 0 | 0 | 0 | S2 | 1 | 0 | 1 | 0 | 1 | 0 | (101) S5 | CA0 |
| | | | | | | | | | | | |
| 1 | 1 | 1 | S3 | 0 | 0 | 1 | 1 | 0 | +1 | (110) S6 | DB1 |
| 0 | 1 | 1 | S3 | 1 | 0 | 1 | 1 | 0 | +1 | (110) S6 | DB0 |
| 1 | 1 | 0 | S3 | 0 | 0 | 1 | 1 | 1 | +1 | (111) S7 | DA1 |
| 0 | 1 | 0 | S3 | 1 | 0 | 1 | 1 | 1 | +1 | (111) S7 | DA0 |

## FIGURE 4B

EP 0 821 827 B1

| $A_{k-1}$ | $A_k$ | $A_{k+1}$ | State | $B_{k-3}$ | $B_{k-2}$ | $B_{k-1}$ | $B_k$ | $B_{k+1}$ | $Y_k$ | Next State | Branch |
|---|---|---|---|---|---|---|---|---|---|---|---|
| 0 | 1 | 0 | S4 | 0 | 1 | 0 | 0 | 0 | -1 | (000) S0 | EA0 |
| 1 | 1 | 0 | S4 | 1 | 1 | 0 | 0 | 0 | -1 | (000) S0 | EA1 |
| 0 | 1 | 1 | S4 | 0 | 1 | 0 | 0 | 1 | -1 | (001) S1 | EB0 |
| 1 | 1 | 1 | S4 | 1 | 1 | 0 | 0 | 1 | -1 | (001) S1 | EB1 |
| 0 | 0 | 0 | S5 | 0 | 1 | 0 | 1 | 0 | 0 | (010) S2 | FA0 |
| 1 | 0 | 0 | S5 | 1 | 1 | 0 | 1 | 0 | 0 | (010) S2 | FA1 |
| 0 | 0 | 1 | S5 | 0 | 1 | 0 | 1 | 1 | 0 | (011) S3 | FB0 |
| 1 | 0 | 1 | S5 | 1 | 1 | 0 | 1 | 1 | 0 | (011) S3 | FB1 |

# FIGURE 4C

| $A_{k-1}$ | $A_k$ | $A_{k+1}$ | State | $B_{k-3}$ | $B_{k-2}$ | $B_{k-1}$ | $B_k$ | $B_{k+1}$ | $Y_k$ | Next State | Branch |
|---|---|---|---|---|---|---|---|---|---|---|---|
| 1 | 1 | 1 | S6 | 0 | 1 | 1 | 0 | 0 | -1 | (100) S4 | GB1 |
| 0 | 1 | 1 | S6 | 1 | 1 | 1 | 0 | 0 | -1 | (100) S4 | GB0 |
| 1 | 1 | 0 | S6 | 0 | 1 | 1 | 0 | 1 | -1 | (101) S5 | GA1 |
| 0 | 1 | 0 | S6 | 1 | 1 | 1 | 0 | 1 | -1 | (101) S5 | GA0 |
| 1 | 0 | 1 | S7 | 0 | 1 | 1 | 1 | 0 | 0 | (110) S6 | HB1 |
| 0 | 0 | 1 | S7 | 1 | 1 | 1 | 1 | 0 | 0 | (110) S6 | HB0 |
| 1 | 0 | 0 | S7 | 0 | 1 | 1 | 1 | 1 | 0 | (111) S7 | HA1 |
| 0 | 0 | 0 | S7 | 1 | 1 | 1 | 1 | 1 | 0 | (111) S7 | HA0 |

## FIGURE 4D

*Fig. 4E*

EP 0 821 827 B1